# FASCICULE DE BREVET EUROPEEN

(11) **EP 4 500 076 B1**
(45) Date de publication et mention de la délivrance du brevet: **08.04.2026**
(21) Numéro de dépôt: 23714762.4
(22) Date de dépôt: 29.03.2023
(51) Int. Cl.: F21S 41/675, B60Q 1/20, B60Q 1/068, F21W 102/155, F21W 102/30

(54) **MODULE LUMINEUX COMPORTANT UN DISPOSITIF DE REGLAGE DE L'ORIENTATION D'UN FAISCEAU LUMINEUX A COUPURE**
LEUCHTMODUL MIT EINER VORRICHTUNG ZUM EINSTELLEN DER AUSRICHTUNG EINES LICHTSTRAHLS MIT HELL-DUNKEL-GRENZE
LIGHTING MODULE COMPRISING A DEVICE FOR ADJUSTING THE ORIENTATION OF A LIGHT BEAM WITH CUT-OFF LINE

(30) Priorité: 29.03.2022 FR 2202842
(43) Date de publication de la demande: 05.02.2025
(73) Titulaire: VALEO VISION, 93012 Bobigny Cedex (FR)
(72) Inventeur: STANUS, Johanny, 7822 Meslin L'Eveque (BE); EGGENSCHWILER, Sylvain, 7822 Meslin L'Eveque (BE); ROLLAND, Johan, 7822 Meslin L'Eveque (BE)
(74) Mandataire: Valeo Visibility
(86) Numéro de dépôt international: PCT/EP2023/058197
(87) Numéro de publication internationale: WO 2023/187009

(56) Documents cités:
- DE-A1- 102012 024 050
- JP-A- H10 112 202
- KR-A- 20130 071 803
- KR-B1- 101 977 686
- US-A- 3 229 082

## Description

### Domaine technique

La présente invention appartient au domaine de l'éclairage, en particulier de l'éclairage pour véhicule automobile. L'invention vise notamment un module lumineux comportant un élément optique configuré de sorte à générer un faisceau lumineux dit « à coupure », c'est-à-dire s'étendant d'un côté d'une ligne de coupure, ainsi qu'un dispositif de réglage de l'orientation de la ligne de coupure du faisceau lumineux. Sans que cela ne soit limitatif dans la cadre de la présente invention, le module lumineux peut être monté dans un élément d'éclairage ou de signalisation, et/ou dans un projecteur de véhicule automobile.

### Etat de la technique

Dans le domaine de l'éclairage automobile, il est généralement connu des modules lumineux montés dans un projecteur du véhicule pour projeter des faisceaux réglementaires d'éclairage dits « à coupure », c'est-à-dire s'étendant d'un côté d'une ligne de coupure. Une telle ligne de coupure, correspondant à une limite supérieure du faisceau lumineux, permet d'éviter que le faisceau ne s'étende trop vers le haut et ne gêne la vision de personnes situées en face du véhicule. Ce type de module lumineux comporte typiquement un boîtier définissant un logement à l'intérieur duquel sont agencés : au moins une source lumineuse, un élément optique agencé en regard de ladite au moins une source lumineuse et configuré de sorte à générer le faisceau lumineux « à coupure », et un dispositif de réglage de l'orientation de la ligne de coupure du faisceau lumineux selon au moins une direction de réglage (typiquement la direction verticale). Un tel faisceau lumineux « à coupure » est par exemple un faisceau d'un feu antibrouillard, sans que cela ne soit limitatif dans le cadre de la présente invention. La ou chaque source lumineuse est typiquement une diode électroluminescente. L'élément optique est par exemple un réflecteur optique ou encore une lentille. Lorsque l'élément optique est un réflecteur, la ou chaque source lumineuse projette de la lumière sur le réflecteur, et la lumière est ensuite réfléchie au travers d'une glace de fermeture afin d'être projetée par cette dernière dans l'environnement extérieur du véhicule, en particulier sur la route.

Le dispositif de réglage de l'orientation de la ligne de coupure du faisceau lumineux, qui est lié à une partie de l'élément optique, permet de faire varier la hauteur du faisceau lumineux émis par le module afin que ce dernier ne soit ni trop haut ni trop bas. En actionnant le dispositif de réglage, on transmet un mouvement à l'élément optique (typiquement un mouvement de rotation), ce qui entraîne une adaptation de la hauteur du faisceau lumineux.

Il est connu un module lumineux comportant un boîtier définissant un logement à l'intérieur duquel sont agencés : une source lumineuse, un réflecteur optique monté mobile en rotation par rapport à la source lumineuse et agencé en regard de cette source lumineuse, et un dispositif de réglage de l'orientation du faisceau lumineux généré par le réflecteur optique. Le dispositif de réglage de l'orientation du faisceau lumineux comporte par exemple une tige munie de cannelures longitudinales d'engrenage. Les cannelures longitudinales d'engrenage sont en prise avec des systèmes à crémaillères courbés prévus à l'arrière du réflecteur, pour entraîner en rotation le réflecteur autour d'un axe de rotation lorsque le dispositif de réglage de l'orientation du faisceau lumineux est actionné. Pour permettre cet actionnement, la tige est fixée à un mécanisme à engrenages, lui-même relié à une tête de réception d'un outil de réglage extérieur au module, la tête de réception faisant saillie à l'extérieur du boîtier à travers une ouverture ménagée dans ce dernier. Un opérateur peut ainsi insérer l'outil de réglage dans la tête de réception du dispositif qui traverse une face avant ou arrière du véhicule, de manière à entraîner en rotation la tige et donc le réflecteur autour de l'axe de rotation, et de modifier ainsi l'orientation du faisceau lumineux.

Toutefois, un inconvénient du dispositif de réglage utilisé dans un tel module lumineux est que le réglage de l'orientation du faisceau lumineux qu'il permet est relativement imprécis. En outre, en cas de vibrations mécaniques appliquées sur le module lumineux, le faisceau lumineux est susceptible de se mouvoir, déréglant de fait son orientation voire générant un phénomène de tremblement et d'oscillation de faisceau.

D'autres modules lumineux connus comportent un élément optique (du type lentille ou réflecteur) monté mobile en rotation, et un dispositif de réglage de l'orientation du faisceau lumineux constitué d'un système à vis sans fin. La vis sans fin vient généralement coopérer avec un pas de vis prévu sur l'élément optique ou sur une platine de support de l'élément optique, afin de permettre un réglage de l'orientation du faisceau lumineux selon une direction de réglage. Toutefois, un inconvénient de ce type de module lumineux est qu'il nécessite de prévoir une butée de fin de course pour la vis sans fin. Or, la présence d'une telle butée impose l'utilisation d'un mécanisme à débrayage, afin d'éviter que le contact avec la butée ne vienne détériorer le produit. Ceci augmente le coût de production du module lumineux, ainsi que l'encombrement de ce dernier. La divulgation du document DE 10 2012 024050 est également pertinente pour comprendre l'invention.

### Exposé de l'invention

La présente invention vient améliorer la situation.

Un objectif de l'invention est de proposer un module lumineux selon la revendication 1.

Le faisceau lumineux généré par l'élément optique est un faisceau lumineux « à coupure ». Un tel faisceau lumineux « à coupure » est par exemple un faisceau d'un feu antibrouillard, sans que cela ne soit limitatif dans le cadre de la présente invention. Le réglage de l'orientation de la ligne de coupure du faisceau lumineux selon au moins une direction de réglage correspond préférentiellement à un positionnement de la ligne de coupure selon la direction verticale. L'élément optique configuré pour générer le faisceau lumineux est par exemple un réflecteur ou une lentille, sans que cela ne soit limitatif dans le cadre de la présente invention. Lorsque l'élément optique est une lentille, le module lumineux est plus compact. Lorsque l'élément optique est un réflecteur, les performances optiques et lumineuses du module lumineux sont améliorées. Dans le cadre de la présente invention, le dispositif de réglage de l'orientation de la ligne de coupure du faisceau lumineux est un dispositif de réglage de l'inclinaison de l'élément optique autour de l'axe de rotation.

Grâce à une telle configuration du dispositif de réglage du faisceau lumineux, qui comporte un système à came et engrenage muni d'un excentrique, le réglage de l'orientation du faisceau lumineux est plus précis et plus stable, et permet d'obtenir une structure compacte et plus économique pour le module lumineux. Un tel excentrique permet en outre de conférer un mouvement pendulaire à l'élément optique pendant le réglage de sa rotation et de l'orientation de la ligne de coupure du faisceau, ce qui permet de supprimer le recours à des butées et à un mécanisme de débrayage, et donc de réduire les coûts de production ainsi que l'encombrement du module lumineux.

Selon l'invention, le système à came et engrenage comporte en outre une vis sans fin et une roue dentée, la vis sans fin étant munie d'une tête de réception d'un outil ou organe de réglage extérieur au module, la roue dentée étant solidarisée à l'arbre à came et engrenant avec la vis sans fin.

Selon un mode de réalisation préféré de l'invention, la vis sans fin et la roue dentée définissent un rapport de démultiplication, la vis sans fin et la roue dentée étant configurées de telle sorte que le rapport de démultiplication est égal au moins à deux, de préférence est égal à deux, la roue dentée formant un pignon démultiplicateur. Ceci permet d'améliorer la stabilité du réglage de l'orientation de la ligne de coupure. Un tel rapport de démultiplication permet en effet de figer la position de l'arbre à came (lorsque l'outil ou organe de réglage extérieur au module n'est pas utilisé), et de bloquer ainsi en quelque sorte l'inclinaison de l'élément optique dans sa position de réglage. Ceci permet par conséquent d'éviter tout déréglage de l'orientation de la ligne de coupure du faisceau lumineux au cours de l'utilisation du module lumineux.

Selon un mode de réalisation de l'invention, le nombre de dents de la roue dentée est égal à vingt-huit. Lorsque le rapport de démultiplication défini par la vis sans fin et par la roue dentée est égal à deux, ceci signifie qu'un opérateur muni de l'outil ou organe de réglage doit réaliser quatorze tours de l'outil ou organe de réglage pour effectuer un cycle complet allant du débattement angulaire minimal au débattement angulaire maximal de l'élément optique.

Selon un mode de réalisation de l'invention, l'arbre à came est fixé par emmanchement dans un logement de réception ménagé au sein de la roue dentée.

Selon un mode de réalisation préféré de l'invention, une face externe de l'élément optique est pourvue d'un organe en forme de fourche, ledit organe en forme de fourche formant ladite partie de l'élément optique configurée pour coopérer avec l'excentrique lorsque l'arbre à came est entraîné en rotation, pour l'entraînement en rotation de l'élément optique autour de l'axe de rotation. Un tel organe en forme de fourche fournit ainsi un moyen efficace, simple, peu encombrant et peu onéreux pour régler l'inclinaison de l'élément optique autour de l'axe de rotation, par coopération avec la rotation de l'excentrique (obtenue via l'entraînement en rotation de l'arbre à came par l'outil ou organe de réglage extérieur).

Selon un mode de réalisation de l'invention, l'excentrique est monté en appui sur un bord intérieur prédéfini de l'organe en forme de fourche, et est maintenu entre les deux branches de la fourche.

Selon un mode de réalisation de l'invention, l'élément optique est constitué d'un matériau plastique, de préférence du polycarbonate (aussi appelé PC). De manière préférentielle, lorsque l'élément optique est un réflecteur constitué d'un matériau plastique de type polycarbonate, le réflecteur comporte sur sa face interne un revêtement aluminé (apte à réfléchir la lumière). De préférence, le revêtement est appliqué sur le réflecteur via un processus de revêtement sous vide.

Selon un mode de réalisation préféré de l'invention, la forme de l'excentrique est telle que le débattement angulaire obtenu pour l'élément optique dans la direction de réglage est compris entre - 4° et + 4°. Ceci permet de réduire le nombre de tours de l'outil ou organe de réglage extérieur au module nécessaires pour balayer en entier la plage de débattement angulaire de l'élément optique.

Selon un mode de réalisation de l'invention, l'excentrique présente une forme sensiblement ovale ou ovoïde. La forme de l'excentrique est en particulier optimisée en fonction de l'espace disponible au sein du boîtier.

Un autre objet de l'invention concerne un élément d'éclairage et/ou de signalisation de véhicule, notamment de véhicule automobile, comprenant un module lumineux selon l'invention.

Ici, on entend par « véhicule » tout type de véhicule tel qu'un véhicule automobile, un cyclomoteur, une motocyclette, un robot de stockage dans un entrepôt, ou toute autre engin apte à embarquer au moins un passager ou destiné au transport de personnes ou d'objets.

Selon un mode de réalisation de l'invention, l'élément d'éclairage et/ou de signalisation comprend en outre un dissipateur thermique fixé sur le dessus du boîtier du module lumineux.

Selon un mode de réalisation de l'invention, l'élément d'éclairage et/ou de signalisation est un feu antibrouillard de véhicule.

Selon un mode de réalisation préféré de l'invention, l'élément optique comporte au moins un pion qui fait saillie latéralement depuis une face supérieure du réflecteur, une face supérieure du boîtier étant munie d'au moins un support de réception du pion, et une face inférieure du dissipateur thermique étant munie d'au moins un organe de blocage du pion, le pion s'étendant à travers une ouverture supérieure du boîtier et étant monté à pivotement sur le support de réception et dans l'organe de blocage. Cette coopération entre le boîtier du module lumineux d'une part et le dissipateur thermique d'autre part (respectivement via le support de réception et l'organe de blocage du pion), pour assurer le montage à pivotement et le maintien de l'élément optique, permet de réduire la chaîne de cotes ainsi que d'assurer une précision dans la focalisation obtenue pour le faisceau lumineux, ce qui permet de réduire avantageusement la plage de débattement angulaire nécessaire pour l'élément optique.

Un autre objet de l'invention concerne un projecteur de véhicule comprenant un module lumineux ou un élément d'éclairage et/ou de signalisation selon l'invention.

### Brève description des dessins

D'autres caractéristiques et avantages de l'invention apparaîtront à l'examen de la description détaillée ci-après, et des dessins annexés sur lesquels :
[Fig 1] est une vue en perspective d'un élément d'éclairage et/ou de signalisation comprenant un module lumineux selon un mode de réalisation de l'invention ;
[Fig 2] est une vue en perspective éclatée de l'élément d'éclairage et/ou de signalisation de la figure 1 ;
[Fig 3] est une vue en perspective du module lumineux de la figure 1, dans laquelle certains composants et certaines pièces ont été omis, le module lumineux comprenant un réflecteur optique, plusieurs sources lumineuses, et un dispositif de réglage de l'orientation d'une ligne de coupure du faisceau lumineux ;
[Fig 4] est une vue en perspective du réflecteur optique, des sources lumineuses, et du dispositif de réglage de la figure 3 ;
[Fig 5] est une première vue en perspective du réflecteur optique et du dispositif de réglage de la figure 3, dans laquelle certains composants et certaines pièces ont été omis ;
[Fig 6] est une deuxième vue en perspective du réflecteur optique et du dispositif de réglage de la figure 3, dans laquelle certains composants et certaines pièces ont été omis ;
[Fig 7] est une vue en perspective du dispositif de réglage de la figure 3 ; et
[Fig 8] est une vue en perspective agrandie montrant un détail de réalisation du dispositif de réglage de la figure 7.

Dans ce document, sauf indication contraire, les termes « horizontal », « vertical » ou « transversal », « inférieur », « supérieur », « dessus », « dessous », « haut », « bas », « côté » sont définis par rapport à l'orientation du module lumineux 2 selon l'invention, destiné à être monté dans un élément d'éclairage et/ou de signalisation 1 de véhicule. En particulier, dans cette demande, le terme « vertical » désigne une orientation perpendiculaire à l'horizon tandis que le terme « horizontal » désigne une orientation parallèle à l'horizon.

Par ailleurs, tout ce qui est dénommé « arrière » ou « avant » est dénommé de manière relative en référence à la face de l'élément d'éclairage et/ou de signalisation 1 la plus proche de l'extérieur du véhicule. Ainsi, tout ce qui est dénommé « arrière » se trouve du côté le plus éloigné de l'extérieur du véhicule selon la direction d'extension principale de ce dernier, tandis que tout ce qui est dénommé « avant » se trouve du côté le plus proche de l'extérieur du véhicule selon la direction d'extension principale de ce dernier. Toutefois, pour ce qui concerne les feux du véhicule, ceux-ci sont dénommés « avant » ou « arrière » selon le sens arrière-avant du véhicule, donc selon le sens de roulement classique de ce dernier.

### Description détaillée

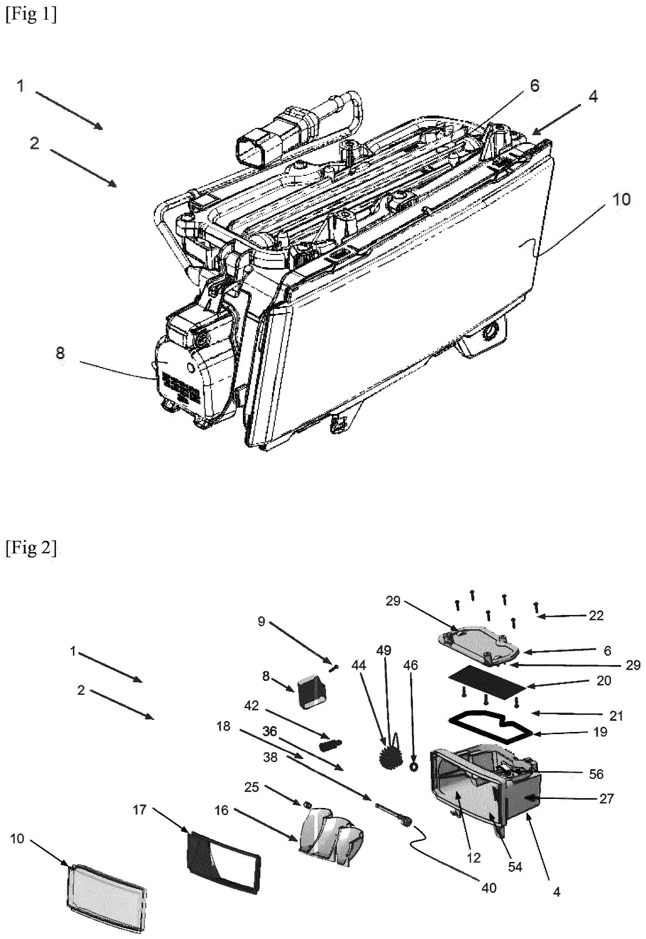

Les figures 1 à 3 représentent un élément d'éclairage et/ou de signalisation 1 de véhicule comprenant le module lumineux 2 selon l'invention. Le module lumineux 2 est intégré en face avant ou arrière du véhicule, et comporte un boîtier 4 de préférence hermétique. L'élément d'éclairage et/ou de signalisation 1 comporte en outre un dissipateur thermique 6 fixé sur le dessus du boîtier 4, ainsi qu'un boîtier auxiliaire de protection 8 fixé sur un flanc du boîtier 4 (par exemple au moyen d'une vis 9) et définissant un logement. Le dissipateur thermique 6 permet de dissiper la chaleur émise par des sources lumineuses agencées au sein du boîtier 4. Le dissipateur thermique 6 est par exemple un radiateur, typiquement un radiateur en aluminium. L'élément d'éclairage et/ou de signalisation 1 est par exemple un feu antibrouillard avant ou arrière de véhicule (sans que cela ne soit limitatif dans le cadre de la présente invention), et peut typiquement faire partie d'un projecteur du véhicule.

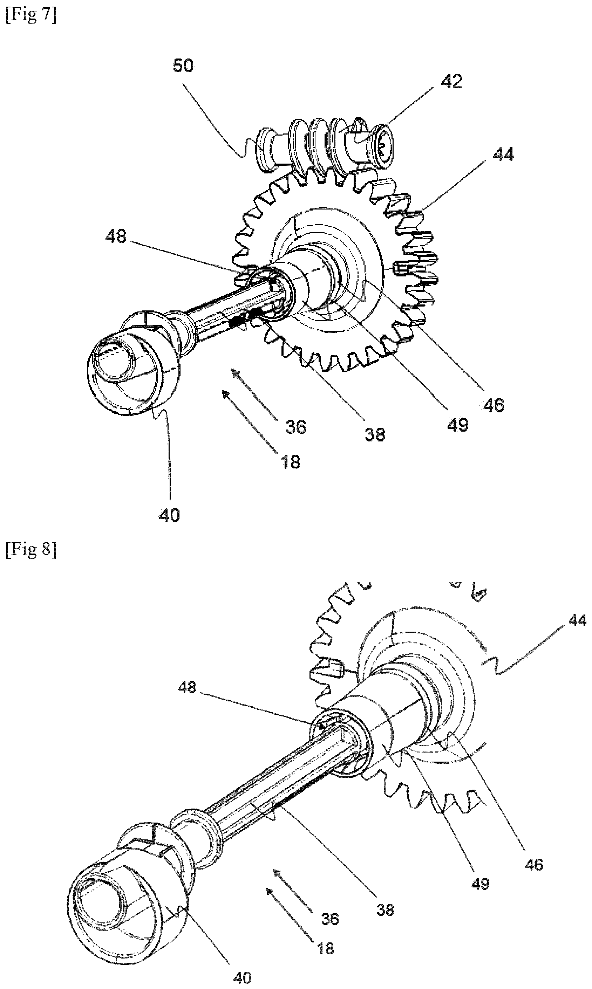

Le boîtier 4 est classiquement fermé par une glace de fermeture 10.. Le boîtier 4 définit un logement 12 à l'intérieur duquel sont agencés plusieurs sources lumineuses (non représentées sur les figures pour des raisons de clarté), un élément optique 16 configuré de sorte à générer un faisceau lumineux s'étendant d'un côté d'une ligne de coupure (une telle ligne de coupure n'étant pas représentée sur les figures pour des raisons de clarté), et un dispositif 18 de réglage de l'orientation de la ligne de coupure du faisceau lumineux selon au moins une direction de réglage. Selon l'exemple de réalisation particulier illustré sur les figures 1 à 8, l'élément optique 16 est un réflecteur et le dispositif de réglage 18 est configuré pour permettre de régler l'orientation de la ligne de coupure du faisceau lumineux selon une seule direction de réglage. La direction de réglage est préférentiellement la direction verticale. De préférence, comme visible sur les figures 1 à 4, le module lumineux 2 comporte également, agencés au sein du logement 12, un masque 17 et un joint d'étanchéité 19.

Dans l'exemple de réalisation particulier illustré sur les figures 1 à 4, les sources lumineuses, qui sont des diodes électroluminescentes, sont montées sur une carte de circuit imprimé 20 de type PCB (de l'anglais « Printed Circuit Board »), elle-même disposée sous le dissipateur thermique 6, au voisinage et en regard de ce dernier. La carte de circuit imprimé 20 vient ainsi fermer le boîtier 4 par le dessus, les sources lumineuses s'étendant dans le logement 12 défini par le boîtier 4. La carte de circuit imprimé 20 est fixée sous le dissipateur thermique 6 au moyen de plusieurs vis 21, et le dissipateur thermique 6 est fixé sur le boîtier 4 également au moyen de plusieurs vis 22.

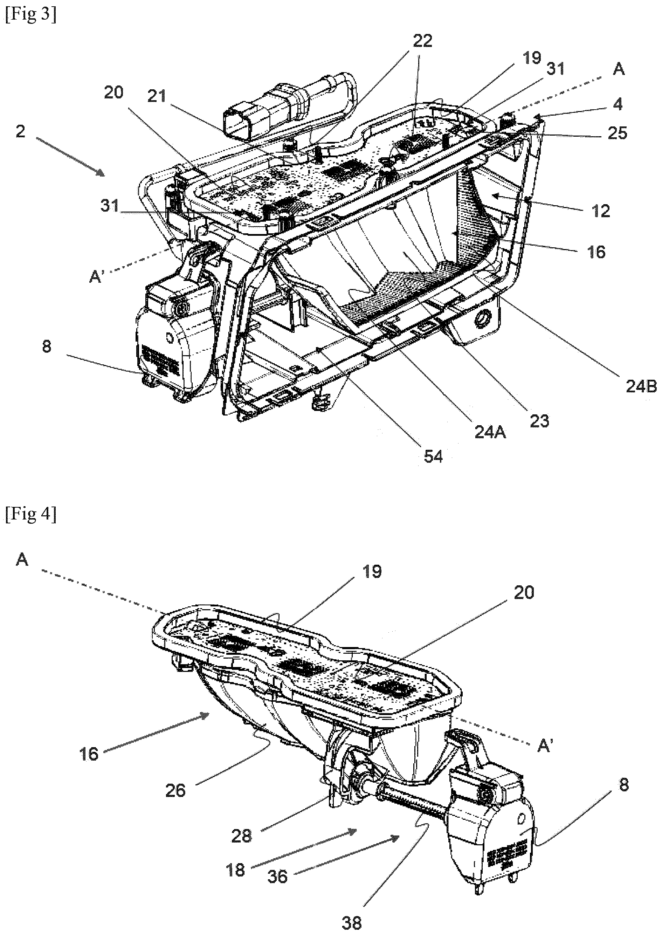

Le réflecteur 16 est agencé en regard des sources lumineuses. Plus précisément, dans l'exemple de réalisation des figures 1 à 4, le réflecteur 16 est agencé en-dessous des sources lumineuses, et présente une face interne concave 23 disposée en regard de ces sources lumineuses (le réflecteur 16 présente ainsi une forme globalement parabolique). De cette manière, les sources lumineuses éclairent la face interne concave 23 du réflecteur 16, ce qui provoque une réflexion optique des rayons de lumière sur le réflecteur 16 et permet de générer le faisceau lumineux qui s'étend d'un côté de la ligne de coupure. Le faisceau lumineux est alors dirigé vers l'optique 10. Le réflecteur 16 comporte typiquement des stries 24A, 24B, réparties par exemple entre un premier ensemble de stries verticales 24A et un second ensemble de stries horizontales 24B. Les stries verticales 24A du premier ensemble de stries, aussi appelée « stries de cavité », permettent de bien distribuer la lumière sur tout le champ du module lumineux 2. Les stries horizontales 24B du second ensemble de stries permettent d'éviter des réflexions lumineuses parasites ainsi que de bien diffuser la lumière pour obtenir la forme réglementaire (avec la ligne de coupure bien délimitée) du faisceau lumineux, afin notamment d'éviter des phénomènes d'éblouissement. Le réflecteur 16 est monté mobile autour d'un axe de rotation A-A'. Pour ce faire, dans l'exemple de réalisation des figures 2 à 6, le réflecteur 16 est muni de deux pions supérieurs cylindriques 25 qui font saillie latéralement et horizontalement de part et d'autre du réflecteur 16, depuis une face supérieure de ce dernier. Comme illustré sur la figure 2, la face supérieure du boîtier 4 est munie de deux supports 27 de réception des pions 25 (qui prennent par exemple la forme d'indentations ou d'encoches), sur lesquels reposent les pions 25 et qui permettent une indexation du réflecteur 16 selon la direction verticale. Le réflecteur 16 est monté à pivotement sur les supports 27, via ses pions 25. En outre, le dissipateur thermique 6 est avantageusement muni sur sa face interne de deux organes 29 de blocage des pions 25 dans la direction horizontale, de tels organes 29 prenant par exemple la forme de fourches. Le réflecteur 16 est également monté à pivotement dans les organes de blocage 29, via ses pions 25. Les deux organes de blocage 29 permettent d'assurer l'indexation et l'isostatisme du réflecteur 16 selon la direction horizontale. Afin de permettre cette coopération entre les pions 25 du réflecteur 16 et les organes de blocage 29 du dissipateur thermique 6, deux découpes 31 (visibles sur la figure 3) sont ménagées dans la carte de circuit imprimé 20, qui permettent le passage des pions 25 à travers la carte 20 (les pions s'étendant également à travers une ouverture supérieure 56 du boîtier 4). En variante non représentée, le réflecteur 16 peut être monté mobile directement au sein du boîtier 4, par exemple via un support de pivot ou berceau de rotation du réflecteur 16 prévu dans le boîtier 4. Un tel support de pivot ou berceau de rotation prend alors typiquement la forme de pions ou de clips directement surmoulés dans le boîtier 4 et sur lesquels le réflecteur 16 vient se positionner pour être maintenu et permettre ainsi le montage en rotation du réflecteur autour de l'axe de rotation.

Le réflecteur 16 est par exemple constitué d'un matériau plastique, de préférence du polycarbonate. Le réflecteur 16 comporte typiquement sur sa face interne concave 23 un revêtement aluminé (apte à réfléchir la lumière). De préférence, le revêtement est appliqué sur le réflecteur 16 via un processus de revêtement sous vide.

De préférence, les sources lumineuses sont alignées sur la carte de circuit imprimé 20 le long d'un axe, cet axe étant confondu avec l'axe de rotation A-A' du réflecteur 16.

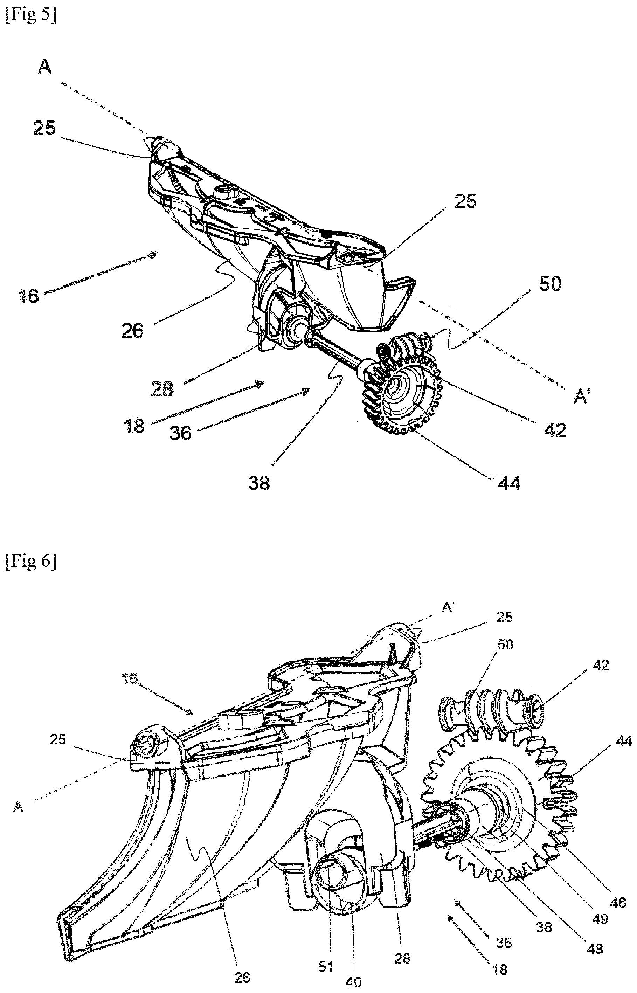

De préférence, une face externe 26 (typiquement convexe) du réflecteur 16 est munie d'un organe en forme de fourche 28. L'organe en forme de fourche 28 est ainsi situé à l'arrière du réflecteur 16, du coté opposé à celui des sources lumineuses par rapport à la paroi du réflecteur 16. Un tel organe en forme de fourche 28, dont les branches sont orientées de préférence vers le bas, est notamment visible aux figures 5 et 6. De préférence, les branches de l'organe en forme de fourche 28 définissent ensemble un plan général d'extension. L'organe en forme de fourche 28 forme un appendice faisant saillie à l'arrière du réflecteur 16 et s'étendant sensiblement transversalement à la paroi du réflecteur 16. Le réflecteur 16 et l'organe en forme de fourche 28 forment de préférence une seule et même pièce de matière.

Le dispositif de réglage 18 est un dispositif de réglage manuel lié au réflecteur 16. Le dispositif de réglage 18 est ainsi configuré pour coopérer avec un outil ou organe de réglage extérieur au module 2 (un tel outil ou organe de réglage n'étant pas représenté sur les figures pour des raisons de clarté), de manière à entraîner en rotation le réflecteur 16 autour de l'axe de rotation et à ainsi modifier l'orientation de la ligne de coupure du faisceau lumineux. L'outil ou organe de réglage configuré pour coopérer avec le dispositif de réglage 18 est par exemple un tournevis.

Le dispositif de réglage 18 comporte un système à came et engrenage 36. Le système à came et engrenage 36 comporte un arbre à came 38 et un excentrique 40 solidarisé à l'arbre à came 38. De préférence, le système à came et engrenage 36 comporte en outre une vis sans fin 42, une roue dentée 44 et un joint torique d'étanchéité 46.

Comme illustré sur les figures 6 à 8, l'arbre à came 38 est par exemple fixé par emmanchement dans un logement de réception 48 ménagé dans la roue dentée 44. Le logement de réception 48 est par exemple défini par l'intérieur d'un manchon central 49 solidarisé à la roue dentée 44. Le logement de réception 48 forme par exemple une cavité hexagonale complémentaire de la forme de l'arbre à came 38 et permettant la fixation de ce dernier dans la roue dentée 44, sans que cela ne soit limitatif.

L'excentrique 40 est configuré pour coopérer avec une partie du réflecteur 16 lorsque l'arbre à came 38 est entraîné en rotation, pour entraîner en rotation le réflecteur 16 autour de l'axe de rotation A-A'. Plus spécifiquement, dans l'exemple de réalisation préférentiel représenté sur les figures 4 à 8, l'excentrique 40 est configuré pour coopérer avec l'organe en forme de fourche 28 lorsque l'arbre à came 38 est entraîné en rotation, pour l'entraînement en rotation du réflecteur 16 autour de l'axe de rotation A-A'. L'arbre à came 38 s'étend alors orthogonalement au plan général d'extension défini par les branches de l'organe en forme de fourche 28. L'excentrique 40 est monté en appui sur un bord intérieur 51 de l'organe en forme de fourche 28, et est maintenu entre les deux branches de la fourche. De cette façon, la rotation de l'excentrique (qui présente une forme de révolution asymétrique) entraîne un déplacement de l'organe en forme de fourche 28 vers l'arrière ou vers l'avant, ce qui provoque la rotation du réflecteur 16 autour de l'axe de rotation A-A'. La forme de l'excentrique 40 est avantageusement choisie de manière à optimiser l'espace disponible au sein du boîtier 4, ainsi que le débattement angulaire du réflecteur 16 au sein du module lumineux 2. Dans l'exemple de réalisation préférentiel représenté sur les figures 2 à 8, l'excentrique 40 présente une forme sensiblement ovale ou ovoïde. La forme de l'excentrique 40 est telle que le débattement angulaire obtenu pour le réflecteur 16 dans la direction de réglage (ici la direction verticale) est de préférence compris entre - 4° et + 4°.

La vis sans fin 42 est munie d'une tête 50 de réception de l'outil ou organe de réglage extérieur au module lumineux 2. La tête de réception 50 s'étend à travers une ouverture (non représentée) prévue à cet effet dans la face avant ou arrière du véhicule, de manière à être accessible pour un utilisateur positionné devant cette face et muni de l'outil ou organe de réglage. La vis sans fin 42 s'étend selon une direction sensiblement orthogonale au plan principal dans lequel s'étend la roue dentée 44, et engrène avec la roue dentée 44.

La roue dentée 44 forme un pignon démultiplicateur et est solidarisée en son centre à l'arbre à came 38. La vis sans fin 42 et la roue dentée 44 définissent un rapport de démultiplication. La vis sans fin 42 et la roue dentée 44 sont configurées de telle sorte que le rapport de démultiplication est égal au moins à deux, de préférence est égal à deux. Dans l'exemple de réalisation particulier des figures 2 à 8, la roue dentée 44 comporte vingt-huit dents, sans que cela ne soit limitatif.

Comme illustré sur les figures 2, 3, 4 et 5, la vis sans fin 42 et la roue dentée 44 sont agencées au sein du logement défini par le boîtier auxiliaire de protection 8, à l'extérieur du boîtier 4. Seul le manchon central 49 de la roue dentée 44 s'étend en partie dans le logement 12 défini par le boîtier 4 et traverse une ouverture (non représentée) prévue à cet effet dans le boîtier 4.

Le joint torique d'étanchéité 46 est disposé autour du manchon central 49 de la roue dentée 44, à l'intérieur du logement 12 au contact d'une paroi latérale interne du boîtier 4. Le joint torique 46 et permet d'assurer l'étanchéité de l'interface formée entre le boîtier 4 et le boîtier auxiliaire de protection 8. Le joint torique 46 est par exemple constitué de silicone.

Le masque 17 forme un contour ou écran esthétique pour le module lumineux 2, visible depuis l'extérieur du véhicule. De par sa forme le masque 17 permet de ne laisser visible que le réflecteur 16 depuis l'extérieur. Comme illustré sur la figure 2, le masque 17 est monté dans une ouverture latérale 54 du boîtier 4, et forme un support pour l'optique 10 qui permet de fixer cette dernière par emboîtement sur le masque 17, à travers l'ouverture latérale 54. Le joint d'étanchéité 19 est configuré pour épouser le pourtour d'une ouverture supérieure 56 ménagée dans le boîtier 4, et est disposé sur le dessus du boîtier 4, entre le dissipateur thermique 6 et le boîtier 4. Le joint d'étanchéité 19 est par exemple constitué de silicone. Le dissipateur thermique 6 est ainsi fixé sur le boîtier 4 au-dessus de l'ouverture supérieure 56, en regard de cette dernière, et vient comprimer le joint d'étanchéité 19. La carte de circuit imprimé 20 s'étend dans l'ouverture supérieure 56 du boîtier 4, sous le dissipateur thermique 6.

En fonctionnement, un utilisateur muni de l'outil ou organe de réglage (typiquement un tournevis) introduit cet outil ou organe de réglage dans la tête de réception 50 de la vis sans fin 42. En imprimant un mouvement de rotation sur elle-même à la vis sans fin 42, cette dernière entraîne en rotation la roue dentée 44, qui elle-même entraîne en rotation l'arbre à came 38 et l'excentrique 40. La rotation de l'excentrique 40, qui coopère avec l'organe en forme de fourche 28, provoque le déplacement de cet organe 28 vers l'arrière ou vers l'avant, ce qui provoque la rotation du réflecteur 16 autour de l'axe de rotation A-A'. Ceci permet d'obtenir le réglage de l'orientation de la ligne de coupure du faisceau lumineux généré par le réflecteur 16 selon la direction de réglage (ici la direction verticale).

La présente invention ne se limite pas aux formes de réalisation décrites ci-avant à titre d'exemples et s'étend à d'autres variantes.

## Revendications

1. Module lumineux (2) intégré en face avant ou arrière d'un véhicule, le module lumineux (2) comportant un boîtier (4) définissant un logement (12) à l'intérieur duquel sont agencés : au moins une source lumineuse, un élément optique (16) agencé en regard de ladite au moins une source lumineuse et configuré de sorte à générer un faisceau lumineux s'étendant d'un côté d'une ligne de coupure, et un dispositif (18) de réglage de l'orientation de la ligne de coupure du faisceau lumineux selon au moins une direction de réglage, l'élément optique (16) étant monté mobile autour d'un axe de rotation (A-A'), ledit dispositif de réglage (18) étant un dispositif de réglage manuel et étant lié audit élément optique (16) et étant configuré pour coopérer avec un outil ou organe de réglage extérieur au module, de manière à entraîner en rotation par rapport au boîtier l'élément optique (16) autour de l'axe de rotation (A-A') et à modifier l'orientation de la ligne de coupure du faisceau lumineux ; **caractérisé en ce que** la au moins une source lumineuse est montée fixe par rapport audit boîtier, **en ce que** l'élément optique (16) est un réflecteur (16) et **en ce que** le dispositif (18) de réglage du faisceau lumineux comporte un système à came et engrenage (36) muni d'un arbre à came (38) et d'un excentrique (40), ledit excentrique (40) étant solidarisé à l'arbre à came (38) et étant configuré pour coopérer avec une partie (28) de l'élément optique (16) lorsque l'arbre à came (38) est entraîné en rotation, pour entraîner en rotation l'élément optique (16) autour de l'axe de rotation (A-A'), le système à came et engrenage (36) comporte en outre une vis sans fin (42) et une roue dentée (44), la vis sans fin (42) étant munie d'une tête (50) de réception dudit outil ou organe de réglage extérieur au module, la roue dentée (44) étant solidarisée à l'arbre à came (38) et engrenant avec la vis sans fin (42).

2. Module lumineux (2) selon la revendication 1, dans lequel la vis sans fin (42) et la roue dentée (44) définissent un rapport de démultiplication, la vis sans fin (42) et la roue dentée (44) étant configurées de telle sorte que le rapport de démultiplication est égal au moins à deux, de préférence est égal à deux, la roue dentée (42) formant un pignon démultiplicateur.

3. Module lumineux (2) selon la revendication 2, dans lequel le nombre de dents de la roue dentée (44) est égal à vingt-huit.

4. Module lumineux (2) selon l'une quelconque des revendications 1 à 3, dans lequel l'arbre à came (38) est fixé par emmanchement dans un logement de réception (48) ménagé au sein de la roue dentée (44).

5. Module lumineux (2) selon l'une quelconque des revendications précédentes, dans lequel une face externe (26) de l'élément optique (16) est pourvue d'un organe en forme de fourche (28), ledit organe en forme de fourche (28) formant ladite partie de l'élément optique (16) configurée pour coopérer avec l'excentrique (40) lorsque l'arbre à came (38) est entraîné en rotation, pour l'entraînement en rotation de l'élément optique (16) autour de l'axe de rotation (A-A').

6. Module lumineux (2) selon la revendication 5, dans lequel l'excentrique (40) est monté en appui sur un bord intérieur prédéfini (51) de l'organe en forme de fourche (28), et est maintenu entre les deux branches de la fourche.

7. Module lumineux (2) selon l'une quelconque des revendications précédentes, dans lequel l'élément optique (16) est constitué d'un matériau plastique, de préférence du polycarbonate.

8. Module lumineux (2) selon l'une quelconque des revendications précédentes, dans lequel la forme de l'excentrique (40) est telle que le débattement angulaire obtenu pour l'élément optique (16) dans la direction de réglage est compris entre - 4° et + 4°.

9. Module lumineux (2) selon la revendication 8, dans lequel l'excentrique (40) présente une forme sensiblement ovale ou ovoïde.

10. Elément d'éclairage et/ou de signalisation (1) de véhicule comprenant un module lumineux (2) selon l'une quelconque des revendications précédentes.

11. Elément d'éclairage et/ou de signalisation (1) de véhicule selon la revendication précédente, dans lequel l'élément d'éclairage et/ou de signalisation (1) comprend en outre un dissipateur thermique (6) fixé sur le dessus du boîtier (4) du module lumineux (2).

12. Elément d'éclairage et/ou de signalisation (1) de véhicule selon la revendication précédente, dans lequel l'élément optique (16) comporte au moins un pion (25) qui fait saillie latéralement depuis une face supérieure du réflecteur (16), une face supérieure du boîtier (4) étant munie d'au moins un support (27) de réception du pion (25), et une face inférieure du dissipateur thermique (6) étant munie d'au moins un organe (29) de blocage du pion (25), le pion (25) s'étendant à travers une ouverture supérieure (56) du boîtier (4) et étant monté à pivotement sur le support de réception (27) et dans l'organe de blocage (29).

13. Projecteur de véhicule comprenant un module lumineux (2) selon l'une quelconque des revendications 1 à 9 ou un élément d'éclairage et/ou de signalisation (1) selon l'une quelconque des revendications 10 à 12.

## Patentansprüche

1. Leuchtmodul (2), das in die Vorder- oder Rückseite eines Fahrzeugs integriert ist, wobei das Leuchtmodul (2) ein Gehäuse (4) umfasst, das einen Hohlraum (12) definiert, in dem angeordnet sind: mindestens eine Lichtquelle, ein optisches Element (16), das in Bezug auf die mindestens eine Lichtquelle angeordnet und so konfiguriert ist, dass es einen Lichtstrahl erzeugt, der sich auf einer Seite einer Hell-Dunkelgrenze erstreckt, und eine Vorrichtung (18) zum Einstellen der Ausrichtung der Hell-Dunkelgrenze des Lichtstrahls in mindestens einer Einstellrichtung, wobei das optische Element (16) um eine Drehachse (A-A') beweglich montiert ist, wobei die Einstellvorrichtung (18) eine manuelle Einstellvorrichtung ist und mit dem optischen Element (16) verbunden ist und so konfiguriert ist, dass sie mit einem Werkzeug oder einer Einstellvorrichtung außerhalb des Moduls zusammenwirkt, um das optische Element (16) in Bezug auf das Gehäuse um die Drehachse (A-A') zu drehen und die Ausrichtung der Hell-Dunkelgrenze des Lichtstrahls zu ändern; **dadurch gekennzeichnet, dass** die mindestens eine Lichtquelle in Bezug auf das Gehäuse fest montiert ist, dass das optische Element (16) ein Reflektor (16) ist und dass die Vorrichtung (18) zum Einstellen des Lichtstrahls ein Nocken- und Zahnradsystem (36) mit einer Nockenwelle (38) und einem Exzenter (40) umfasst, wobei der Exzenter (40) mit der Nockenwelle (38) verbunden ist und so konfiguriert ist, dass er mit einem Teil (28) des optischen Elements (16) zusammenwirkt, wenn die Nockenwelle (38) in Drehung versetzt wird, um das optische Element (16) um die Drehachse (A-A') zu drehen, wobei das Nocken- und Zahnradsystem (36) ferner eine Schnecke (42) und ein Zahnrad (44) umfasst, wobei die Schnecke (42) mit einem Kopf (50) zur Aufnahme des Werkzeugs oder der Einstellvorrichtung außerhalb des Moduls versehen ist, wobei das Zahnrad (44) mit der Nockenwelle (38) verbunden ist und mit der Schnecke (42) in Eingriff steht.

2. Leuchtmodul (2) nach Anspruch 1, wobei die Schnecke (42) und das Zahnrad (44) ein Untersetzungsverhältnis definieren, wobei die Schnecke (42) und das Zahnrad (44) so konfiguriert sind, dass das Untersetzungsverhältnis mindestens zwei beträgt, vorzugsweise gleich zwei ist, wobei das Zahnrad (42) ein Untersetzungsritzel bildet.

3. Leuchtmodul (2) nach Anspruch 2, wobei die Anzahl der Zähne des Zahnrads (44) achtundzwanzig beträgt.

4. Leuchtmodul (2) nach einem der Ansprüche 1 bis 3, wobei die Nockenwelle (38) durch Einpressen in einer Aufnahmeöffnung (48) im Zahnrad (44) befestigt ist.

5. Leuchtmodul (2) nach einem der vorhergehenden Ansprüche, wobei eine Außenfläche (26) des optischen Elements (16) mit einem gabelförmigen Organ (28) versehen ist, wobei das gabelförmige Organ (28) den Teil des optischen Elements (16) bildet, der so konfiguriert ist, dass er mit dem Exzenter (40) zusammenwirkt, wenn die Nockenwelle (38) in Drehung versetzt wird, um das optische Element (16) um die Drehachse (A-A') zu drehen.

6. Leuchtmodul (2) nach Anspruch 5, wobei der Exzenter (40) an einem vordefinierten Innenrand (51) des gabelförmigen Organs (28) anliegt und zwischen den beiden Gabelarmen gehalten wird.

7. Leuchtmodul (2) nach einem der vorhergehenden Ansprüche, wobei das optische Element (16) aus einem Kunststoffmaterial, vorzugsweise Polycarbonat, besteht.

8. Leuchtmodul (2) nach einem der vorhergehenden Ansprüche, wobei die Form des Exzenters (40) so ist, dass der für das optische Element (16) in der Einstellrichtung erhaltene Winkelbereich zwischen -4° und +4° liegt.

9. Leuchtmodul (2) nach Anspruch 8, wobei der Exzenter (40) eine im Wesentlichen ovale oder eiförmige Form aufweist.

10. Beleuchtungs- und/oder Signalelement (1) eines Fahrzeugs, umfassend ein Leuchtmodul (2) nach einem der vorhergehenden Ansprüche.

11. Beleuchtungs- und/oder Signalelement (1) eines Fahrzeugs nach dem vorhergehenden Anspruch, wobei das Beleuchtungs- und/oder Signalelement (1) ferner einen Kühlkörper (6) umfasst, der auf der Oberseite des Gehäuses (4) des Leuchtmoduls (2) befestigt ist.

12. Beleuchtungs- und/oder Signalelement (1) eines Fahrzeugs nach dem vorhergehenden Anspruch, wobei das optische Element (16) mindestens einen Zapfen (25) umfasst, der seitlich von einer oberen Fläche des Reflektors (16) vorsteht, wobei eine obere Fläche des Gehäuses (4) mit mindestens einer Aufnahmehalterung (27) für den Zapfen (25) versehen ist und eine untere Fläche des Kühlkörpers (6) mit mindestens einem Blockierelement (29) für den Zapfen (25) versehen ist, wobei der Zapfen (25) sich durch eine obere Öffnung (56) des Gehäuses (4) erstreckt und schwenkbar auf der Aufnahmehalterung (27) und in dem Blockierelement (29) montiert ist.

13. Fahrzeugscheinwerfer, umfassend ein Leuchtmodul (2) nach einem der Ansprüche 1 bis 9 oder ein Beleuchtungs- und/oder Signalelement (1) nach einem der Ansprüche 10 bis 12.

## Claims

1. Light module (2) integrated in the front or rear face of a vehicle, the light module (2) comprising a housing (4) defining a compartment (12) inside which are arranged: at least one light source, an optical element (16) arranged facing said at least one light source and configured so as to generate a light beam extending from one side of a cut-off line, and a device (18) for adjusting the orientation of the cut-off line of the light beam according to at least one adjustment direction, the optical element (16) being mounted movably around a rotation axis (A-A'), said adjustment device (18) being a manual adjustment device and being linked to said optical element (16) and being configured to cooperate with a tool or adjustment member external to the module, so as to rotate the optical element (16) around the rotation axis (A-A') relative to the housing and to modify the orientation of the cut-off line of the light beam; **characterized in that** the at least one light source is mounted fixed relative to said housing, **in that** the optical element (16) is a reflector (16) and **in that** the device (18) for adjusting the light beam comprises a cam and gear system (36) provided with a cam shaft (38) and an eccentric (40), said eccentric (40) being secured to the cam shaft (38) and being configured to cooperate with a part (28) of the optical element (16) when the cam shaft (38) is rotated, to rotate the optical element (16) around the rotation axis (A-A'), the cam and gear system (36) further comprises a worm screw (42) and a toothed wheel (44), the worm screw (42) being provided with a head (50) for receiving said tool or adjustment member external to the module, the toothed wheel (44) being secured to the cam shaft (38) and meshing with the worm screw (42).

2. Light module (2) according to claim 1, wherein the worm screw (42) and the toothed wheel (44) define a reduction ratio, the worm screw (42) and the toothed wheel (44) being configured such that the reduction ratio is equal to at least two, preferably equal to two, the toothed wheel (42) forming a reduction pinion.

3. Light module (2) according to claim 2, wherein the number of teeth of the toothed wheel (44) is equal to twenty-eight.

4. Light module (2) according to any one of claims 1 to 3, wherein the cam shaft (38) is fixed by fitting into a receiving housing (48) provided within the toothed wheel (44).

5. Light module (2) according to any one of the preceding claims, wherein an external face (26) of the optical element (16) is provided with a fork-shaped member (28), said fork-shaped member (28) forming said part of the optical element (16) configured to cooperate with the eccentric (40) when the cam shaft (38) is rotated, for rotating the optical element (16) around the rotation axis (A-A').

6. Light module (2) according to claim 5, wherein the eccentric (40) is mounted in contact with a predefined inner edge (51) of the fork-shaped member (28), and is maintained between the two branches of the fork.

7. Light module (2) according to any one of the preceding claims, wherein the optical element (16) is made of a plastic material, preferably polycarbonate.

8. Light module (2) according to any one of the preceding claims, wherein the shape of the eccentric (40) is such that the angular travel obtained for the optical element (16) in the adjustment direction is between -4° and +4°.

9. Light module (2) according to claim 8, wherein the eccentric (40) has a substantially oval or ovoid shape.

10. Vehicle lighting and/or signaling element (1) comprising a light module (2) according to any one of the preceding claims.

11. Vehicle lighting and/or signaling element (1) according to the preceding claim, wherein the lighting and/or signaling element (1) further comprises a heat sink (6) fixed on top of the housing (4) of the light module (2).

12. Vehicle lighting and/or signaling element (1) according to the preceding claim, wherein the optical element (16) comprises at least one pin (25) that protrudes laterally from an upper face of the reflector (16), an upper face of the housing (4) being provided with at least one support (27) for receiving the pin (25), and a lower face of the heat sink (6) being provided with at least one blocking member (29) for the pin (25), the pin (25) extending through an upper opening (56) of the housing (4) and being pivotally mounted on the receiving support (27) and in the blocking member (29).

13. Vehicle headlight comprising a light module (2) according to any one of claims 1 to 9 or a lighting and/or signaling element (1) according to any one of claims 10 to 12.
